# EUROPÄISCHE PATENTSCHRIFT

(11) **EP 0 504 153 B1**
(45) Veröffentlichungstag und Bekanntmachung des Hinweises auf die Patenterteilung: **24.08.1994**
(21) Anmeldenummer: 90916233.1
(22) Anmeldetag: 14.11.1990
(51) Int. Cl.: E05F 15/16

(54) **ANTRIEBSVORRICHTUNG FÜR BEWEGBARE BAUEINHEITEN**
DRIVE DEVICE FOR MOVABLE COMPONENTS
MECANISME DE COMMANDE POUR ELEMENTS MOBILES

(30) Priorität: 16.12.1989 DE 3941651
(43) Veröffentlichungstag der Anmeldung: 23.09.1992
(73) Patentinhaber: ROBERT BOSCH GMBH, 70442 Stuttgart (DE)
(72) Erfinder: DREIER, Friedrich-Wilhelm, D-7598 Lauf (DE)
(86) Internationale Anmeldenummer: DE9000874
(87) Internationale Veröffentlichungsnummer: WO9109198

(56) Entgegenhaltungen:
- EP-A- 175 996
- DE-A- 3 830 555

## Beschreibung

### Stand der Technik

Die Erfindung geht aus von einer Antriebsvorrichtung für bewegbare Baueinheiten, insbesondere in Fahrzeugen, wie Fensterheber, Schiebedachbetätiger, Spiegeleinsteller u.dgl., der im Oberbegriff des Anspruchs 1 definierten Gattung.

Als Beispiel einer solchen Antriebsvorrichtung für bewegbare Baueinheiten sei ein elektromotorischer Fensterheber genannt, bei welchem durch Betätigen eines von zwei Wahlschaltern für "Fensterschließen" und "Fensteröffnen" der gewünschte Betätigungsvorgang der Seitenscheiben des Fahrzeugs ausgelöst werden kann. Der ausgelöste Vorgang "Fensterschließen" bzw. "Fensteröffnen" läuft automatisch ab, solange der jeweilige Wahlschalter betätigt bleibt und wird bei Erreichen der Endstellung durch Öffnen eines Endschalters abgebrochen. Die Endschalter sind in modernen Systemen bereits durch eine Elektronik mit Hallsensoren ersetzt, die den Antriebsmotor bei Erreichen der Endposition oder bei Auftreten eines Hindernisses in der Fensterbewegungsbahn (Klemmschutz) abschaltet.

Um ein selbstständiges Öffnen der Fensterscheiben, z.B. durch Eigengewicht oder Erschütterungen, zu verhindern, ist es erforderlich, daß die Antriebsvorrichtung oder die Baueinheit selbsthemmend ist, was in der Praxis durch große Reibung im Antriebsmotor oder im Fensterhebersystem erzeugt wird. Dies hat jedoch wesentliche Nachteile. Zum einen ist die gewünschte Reibung im Fertigungsprozeß nur innerhalb eines sehr großen Streubereichs zu reproduzieren, so daß die Antriebsleistung des Antriebsmotors zur Sicherstellung der Funktion wesentlich größer ausgelegt werden muß, als sie im Einzelfall notwendig wäre. Zum andern erfordern größere Antriebsleistungen eine entsprechend größere Auslegung von Zuleitungen, Absicherungen, Batteriekapazität u.a.

### Vorteile der Erfindung

Die erfindungsgemäße Antriebsvorrichtung mit den kennzeichnenden Merkmalen des Anspruchs 1 hat demgegenüber den Vorteil, daß die Antriebsvorrichtung eine sog. aktive Selbsthemmung erhält, d.h. den Bewegungsendstand der angetriebenen Baueinheit überwacht und sich selbsttätig einschaltet, wenn dieser Bewegungsendstand durch äußere Einwirkungen verändert wird, um durch entsprechende Antriebskraft den Bewegungsendstand wieder herzustellen. Das bedeutet, daß sowohl der Antriebsmotor als auch die zu bewegende Baueinheit selbst möglichst reibungsarm ausgeführt werden können. Dies führt einerseits zu einer wesentlichen Einsparung an Antriebsenergie und ermöglicht andererseits den Einsatz kleiner Antriebsmotoren mit kleineren Anschlußleistungen. Reibungsarme Systeme können auch mit einer wesentlich kleineren Fertigungsstreuung hergestellt werden als stark reibungsbehaftete, so daß die vom Antriebsmotor einzuhaltende Kennlinien für den Bewegungsablauf der anzutreibenden Baueinheit wesentlich eingeengt werden können.

Generell kann die erfindungsgemäße Antriebsvorrichtung beide Bewegungsendstellungen der angetriebenen Baueinheit überwachen und je nach Bewegungsrichtung der Baueinheit aus der überwachten Endstellung den Antriebsmotor in die eine oder andere Antriebsrichtung starten, sobald die Baueinheit durch äußere Einwirkungen um mehr als einen Toleranzwert aus der Endstellung herausbewegt worden ist. Bei manchen Anwendungsfällen, z.B. Fensterhebern in Fahrzeugen, ist nur die Überwachung einer Bewegungsendstellung, z.B. der Fensterschließstellung, erforderlich. Hier ist die Erkennung der Bewegungsrichtung der Baueinheit nicht erforderlich und die Steuerelektronik kann vereinfacht werden.

Bekannte Antriebsvorrichtungen für die Seitenscheiben in Fahrzeugen sind heute weitgehend mit sog. Hall-IC ausgerüstet, die die Umdrehungen der Rotorwelle des Antriebsmotors erfassen. Eine entsprechende Steuerelektronik ermöglicht dann das direkte Anfahren von vorbestimmten Fensterpositionen, das Abschalten des Antriebsmotors in den Endpositionen der Fenster und einen Klemmschutz, d.h. Abschalten oder Reversieren des Antriebsmotors im Falle eines Hindernisses in der Fensterbewegungsbahn. Die erfindungsgemäße Antriebsvorrichtung hat den Vorteil, daß diese Hall-IC als Sensoren zur Erfassung der Drehbewegung der Rotorwelle verwendet werden können, so daß der elektronische Zusatzaufwand für die erfindungsgemäße Funktion der aktiven Selbsthemmung recht gering ist.

Durch die in den weiteren Ansprüchen aufgeführten Maßnahmen sind vorteilhafte Weiterbildungen und Verbesserungen der im Anspruch 1 angegebenen Anstriebsvorrichtung möglich.

### Zeichnung

Die Erfindung ist anhand eines in der Zeichnung dargestellten Ausführungsbeispiels in der nachfolgenden Beschreibung näher erläutert. Es zeigen:
- Fig. 1: ein Blockschaltbild einer Antriebsvorrichtung für einen Fensterheber in Kraftfahrzeugen,
- Fig. 2: ein Schaltbild eines Steuergerätes in der Antriebsvorrichtung in Fig. 1,
- Fig. 3: ein Blockschaltbild einer Auswerteeinheit im Steuergerät gemäß Fig. 2,
- Fig. 4: ein Diagramm der Ausgangssignale eines Sensors für Drehbewegungen der Rotorwelle in der Antriebsvorrichtung gemäß Fig. 1.

### Beschreibung des Ausführungsbeispiels

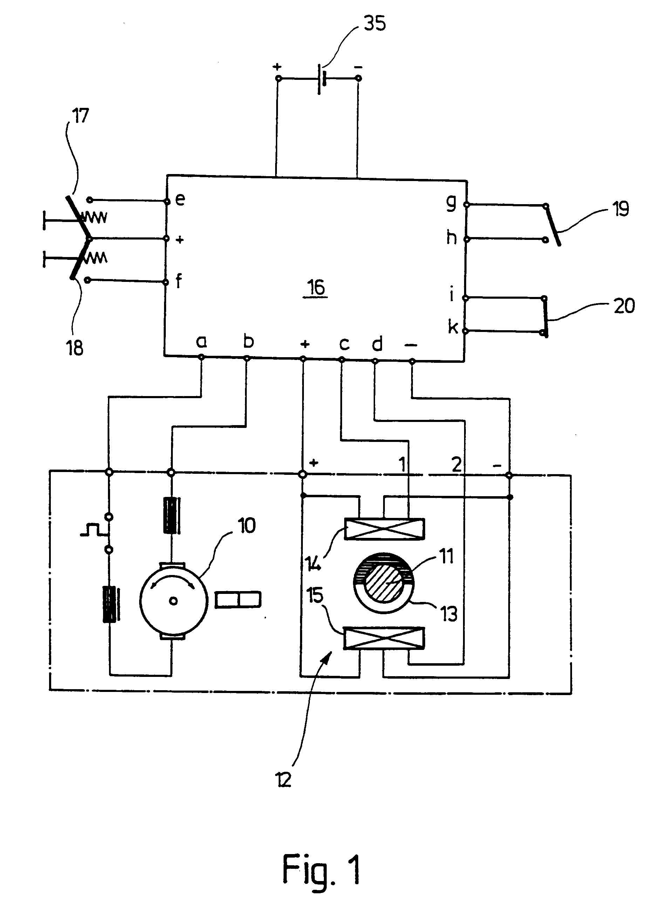

Die in Fig. 1 im Blockschaltbild dargestellte Antriebsvorrichtung für einen Fensterheber in einem Kraftfahrzeug weist einen elektrischen permanentmagneterregten Gleichstrommotor 10 auf, dessen Rotorwelle 11 in zwei Drehrichtungen antreibbar ist. Mittels eines Sensors 12 wird die Drehbewegung der in Fig. 1 rechts im Bild angedeuteten Rotorwelle 11 erfaßt. Der Sensor 12 ist ein an sich bekannter Hall-IC, der in üblichen Fensterhebevorrichtungen die Anzahl der Umdrehungen der Rotorwelle erfaßt, die dann zu verschiedenen Steuermaßnahmen verwendet werden. Er besteht aus einem mit der Rotorwelle 11 drehfest verbundenen Permanentmagneten 13 und zwei Hallelementen 14,15, die an der Rotorwelle 11 raumfest angeordnet und gegeneinander um 90° versetzt sind. An den beiden Ausgangskanälen 1 und 2 des Hall-IC 12 sind bei drehender Rotorwelle 11 zwei Ausgangssignale abnehmbar, die aus einer Folge von Rechteckimpulsen zusammengesetzt sind. Jeweils eine Impulsperiode charakterisiert eine Umdrehung der Rotorwelle 11. Die Impulsfrequenz ist abhängig von der Drehzahl der Rotorwelle 11. Die beiden Impulsfolgen sind um elektrisch 90° gegeneinander phasenverschoben, so daß aus der Richtung der Phasenverschiebung die Drehrichtung der Rotorwelle 11 erkannt werden kann.

Die Antriebsvorrichtung für den Fensterheber weist weiterhin ein an einer Gleichspannungsquelle 35 liegendes Steuergerät 16 auf, an dessen Ausgängen a und b der Motor 10 und an dessen Eingängen c und d jeweils ein Ausgangskanal 1 bzw. 2 des Hall-IC 12 angeschlossen ist. Mit den Eingängen e bzw. f des Steuergeräts 16 ist jeweils ein Schaltkontakt eine als Tastschalter ausgebildeten Wahlschalters 17 bzw. 18 angeschlossen, dessen anderer Schaltkontakt an einem Pluspotential führenden Ausgang "+" des Steuergeräts 16 liegt. Zum Schließen des Fensters ist der Wahlschalter 17 und zum Öffnen der Wahlschalter 18 zu betätigen. Mit den Eingängen g,h und i,k des Steuergeräts 16 ist jeweils ein Endschalter 19 bzw. 20 verbunden. Beide Endschalter 19,20 sind normalerweise geschlossen und werden von dem Fensterheber in den Endstellungen der Fensterscheibe geöffnet, wobei der Endschalter 19 in der Stellung "Fenster zu" und der Endschalter 20 in der Stellung "Fenster offen" geöffnet wird.

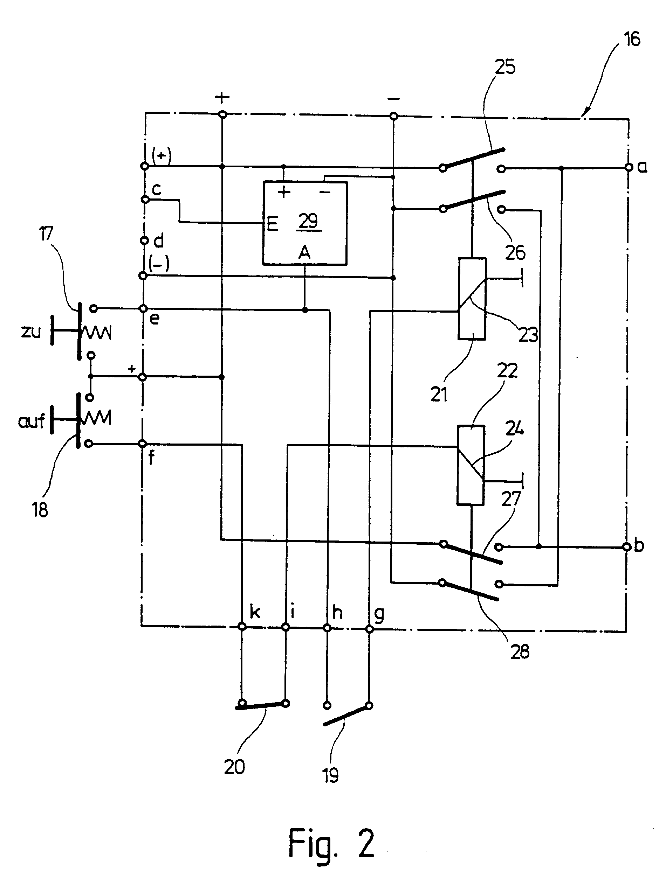

Ein Ausführungsbeispiel des Steuergeräts 16 ist in Fig. 2 als Schaltbild dargestellt. Zum Einschalten des Motors 10 in die eine oder andere Drehrichtung sind zwei Einschaltrelais 21,22 vorgesehen, deren Relaiswicklung 23,24 jeweils über den zugeordneten Endschalter 19,20 und den zugeordneten Wahlschalter 17,18 mit dem positiven Pol "+" der Gleichspannungsquelle 35 verbunden sind. Jedes Einschaltrelais 21,22 weist einen aus den Schaltkontakten 25 und 26 bzw. 27 und 28 bestehenden Doppelschaltkontakt auf, wobei im geschlossenen Zustand jeweils die Schaltkontakte 25 und 27 die Ausgänge a und b des Steuergeräts 16 mit dem Pluspol "+" der Gleichspannungsquelle 35 und die Schaltkontakte 26 und 28 die Ausgänge b und a mit dem Minuspol "-" der Gleichspannungsquelle 35 verbinden.

Wird beispielsweise der Wahlschalter 18 "Fenster "auf" betätigt, so wird das Einschaltrelais 22 über den geschlossenen Endschalter 20 für die Dauer der Betätigung des Wahlschalters 18 an den Pluspol "+" der Gleichspannungsquelle 35 gelegt. Die beiden Schaltkontakte 27,28 schließen und legen damit den Motor 10 über die Ausgänge b,a des Steuergeräts 16 an die Gleichspannungsquelle 35. Die Rotorwelle 11 läuft in der einen Drehrichtung um, und der Fensterheber wird in Richtung "Fenster öffnen" angetrieben. Hat der Fensterheber seine Endstellung erreicht, in welcher das Fenster vollständig geöffnet ist, wird der Endschalter 20 geöffnet und damit die Erregung des Einschaltrelais 22 abgeschaltet. Wird nunmehr der Wahlschalter 17 "Fenster zu" betätigt, so wird das Einschaltrelais 21 erregt und über die geschlossenen Schaltkontakte 25,26 der Motor 10 in inverse Drehrichtung angetrieben. Das Fenster wird wieder geschlossen, bis in der Endstellung der Endschalter 19 geöffnet wird.

Da sowohl der Motor 10 als auch der Fensterheber weitgehend reibungsfrei ausgebildet sind, besteht die Möglichkeit, daß in der Fensterschließstellung das Fenster durch Einwirkungen von außen, wie z.B. starken Erschütterungen, ungewollt geöffnet wird. Um dies zu verhindern, wird mittels des Sensors 12 eine bei der ungewollten Fensterbewegung sich ergebende Drehbewegung der Rotorwelle 11 erfaßt und dann eine Einschaltung des Motors 10 in einer die Fensterschließung bewirkenden Drehrichtung ausgelöst, wenn eine bestimmte Anzahl von Umdrehungen der Rotorwelle 11 festgestellt worden ist. Hierzu ist der Sensor 12 mit einem seiner Ausgangskanäle 1,2, hier dem Ausgangskanal 1, mit dem Eingang E einer Auswerteeinheit 29 verbunden, deren Ausgang A über den Endschalter 19 an die Relaiswicklung 23 des Einschaltrelais 21 gelegt ist. Erkennt die Auswerteinheit 29 eine vorbestimmte Anzahl von Umdrehungen der Rotorwelle 11, so erzeugt sie ein Einschaltsignal, das über den Ausgang A an die Relaiswicklung 29 gelangt und die Schließung der Schaltkontakte 25,26 bewirkt.

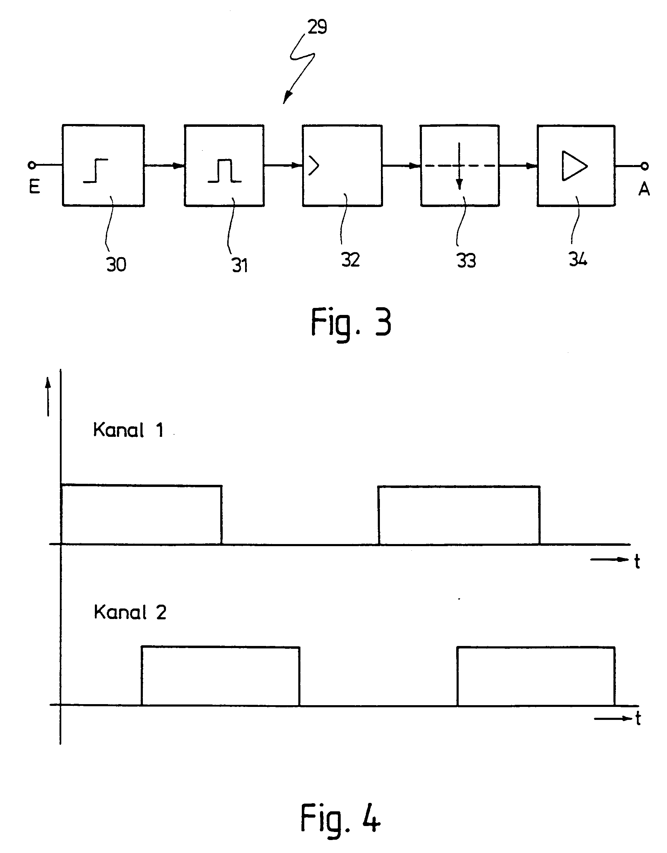

Ein mögliches Ausführungsbeispiel der Auswerteinheit 29 ist in Fig. 3 im Blockschaltbild dargestellt. Sie umfaßt einen Impulsflankendetektor 30, ein Impulsformer 31, einen voreinstellbaren Zähler 32, ein Monoflop 33 und einen Verstärker 34. Der Impulsflankendetektor 30 detektiert die ansteigende positive Flanke des Ausgangssignals des Sensors 12 am Eingang E und gibt ein Ausgangssignal an den Impulsformer 31, der daraus einen Zählimpuls generiert. Dieser Zählimpuls gelangt an den Zähleingang des Zählers 32, der als Rückwärtszähler ausgebildet ist und auf eine vorbestimmte Zählstufe voreingestellt ist. Mit jedem Zählimpuls zählt der Zähler 32 einen Zählschritt rückwärts. Nach der voreingestellten Anzahl von Zählschritten ist der Zähler 32 auf Nullniveau angelangt und gibt ein Signal an das Monoflop 33, das für die Dauer seiner Rücksetzzeit in seinen instabilen Zustand umspringt und ein Signal an den Leistungsverstärker 34 gibt. Der Leistungsverstärker 34 legt für die Dauer der Rücksetzzeit des Monoflops 33 einen Erregerstrom an die Relaiswicklung des Einschaltrelais 21. Das Relais 21 zieht an und die Schaltkontakte 25,26 schließen. Der Motor 10 ist eingeschaltet, und die Rotorwelle 11 dreht in Drehrichtung "Fenster schließen".

Sobald die Schließstellung des Fensters wieder erreicht ist, öffnet der Endschalter 19, der sich zuvor bei der ungewollten Herausbewegung des Fensters aus der Schließstellung automatisch geschlossen hat. Die Rücksetzzeit des Monflops 33 ist so eingestellt, daß sie größer ist als die Zeit, die zum Wiederschließen des Fensters ab Einschalten des Motors 10 benötigt wird.

Die Erfindung ist nicht auf das vorstehend beschriebene Ausführungsbeispiel beschränkt. So kann auf die Endschalter 19,20 verzichtet werden und stattdessen die Ausgangssignale des Sensors 12 für die Abschaltung des Motors 10 bei Erreichen der beiden Endstellungen "Fenster zu" bzw. "Fenster offen" herangezogen werden. Die Ausgangssignale des Sensors 12 bieten weiterhin die Möglichkeit vorbestimmte Fensterpositionen automatisch anzufahren und zusätzlich einen Klemmschutz vorzusehen, der eine Abschaltung des Motors bewirkt, wenn ein Hindernis in der Bewegungsbahn des Fensters auftritt.

Anstelle des Fensterhebers können auch andere bewegbare Baueinheiten angetrieben und in beiden Bewegungsendstellungen auf ungewolltes Verlassen der Bewegungsendstellungen überwacht werden. Das Steuergerät 16 wertet dann die Sensorsignale auf beiden Ausgangskanälen 1,2 des Hall-IC aus und kann dadurch zusätzlich die Drehrichtung bestimmen, in welche der Motor 10 angetrieben werden muß, damit der gewollte Bewegungszustand der Baueinheit automatisch wieder hergestellt wird.

## Patentansprüche

1. Antriebsvorrichtung für bewegbare Baueinheiten, insbesondere in Fahrzeugen, wie Fensterheber, Schiebedachbetätiger, Spiegeleinsteller u.dgl., mit einem reversiblen elektrischen Motor, der eine in zwei Drehrichtungen antreibbare Rotorwelle aufweist, und mit einem Steuergerät zum Einschalten des Motors mit vorbestimmter Drehrichtung der Rotorwelle auf einen Einschaltbefehl hin, dadurch gekennzeichnet, daß der Rotorwelle (11) des Motors (10) ein zumindest im Abschaltzustand des Motors (10) wirksamer Sensor (12) zum Erfassen von Drehbewegungen der Rotorwelle (11) zugeordnet ist und daß das Steuergerät (16) eine Auswerteeinheit (29) zum Auswerten der Sensorsignale und zum Generieren eines Einschaltbefehls in einer der Drehbewegung der Rotorwelle (11) entgegengerichteten Drehrichtung enthält.

2. Vorrichtung nach Anspruch 1, dadurch gekennzeichnet, daß der Sensor (12) derart ausgebildet ist, daß in seinem Ausgangssignal für jeweils eine Umdrehung der Rotorwelle charakteristische Signalanteile enthalten sind, und daß die Auswerteeinheit (29) derart ausgebildet ist, daß sie aus jedem Signalanteil einen Zählimpuls generiert, die Zählimpulse zählt und bei einer vorgegebenen Anzahl von Zählimpulsen den Einschaltbefehl generiert.

3. Vorrichtung nach Anspruch 2, dadurch gekennzeichnet, daß der Sensor (12) einen an der Rotorwelle (11) drehfest sitzenden Permanentmagneten (13) und zwei räumlich fest angeordnete, in Drehrichtung der Rotorwelle (11) um 90° versetzte Hallsensoren (14,15) aufweist, die vorzugsweise in einem sog. Hall-IC integriert sind, der an zwei Ausgangskanälen zwei um 90° phasenverschobene Impulsfolgen aus Rechteckimpulsen liefert.

4. Vorrichtung nach Anspruch 3, dadurch gekennzeichnet, daß die Auswerteeinheit (29) einen Flankendetektor (30), einen Impulsformer (31) und einen voreinstellbaren Zähler (32) aufweist, der bei Erreichen einer vorgegebenen Zählerstellung ein Ausgangsimpuls abgibt, und daß aus dem Ausgangsimpuls des Zählers (32) der Einschaltbefehl abgeleitet ist.

## Claims

1. Drive device for movable components, in particular in vehicles, such as window winders, sliding roof actuators, mirror adjusters and the like, with a reversible electric motor, which has a rotor shaft which can be driven in two directions of rotation, and with a control device for switching the motor on in a predetermined direction of rotation of the rotor shaft in response to a switch-on command, characterized in that the rotor shaft (11) of the motor (10) is assigned a sensor (12), effective at least in the switched-off state of the motor (10), for sensing rotary movements of the rotor shaft (11) and in that the control device (16) includes an evaluation unit (29) for evaluating the sensor signals and for generating a switch-on command in a direction of rotation opposed to the rotary movement of the rotor shaft (11).

2. Device according to Claim 1, characterized in that the sensor (12) is designed in such a way that characteristic signal components are contained in its output signal for in each case one revolution of the rotor shaft, and in that the evaluation unit (29) is designed in such a way that it generates from each signal component a counting pulse, counts the counting pulses and, if there is a predetermined number of counting pulses, generates the switch-on command.

3. Device according to Claim 2, characterized in that the sensor (12) has a permanent magnet (13), seated non-rotatably on the rotor shaft (11), and two Hall sensors (14, 15), which are arranged in a spatially fixed manner, are offset by 90° in the direction of rotation of the rotor shaft (11) and are preferably integrated in a so-called Hall IC, which supplies two 90°-phase-shifted pulse sequences of square-wave pulses to two output channels.

4. Device according to Claim 3, characterized in that the evaluation unit (29) has an edge detector (30), a pulse shaper (31) and a presettable counter (32), which emits an output pulse when a predetermined counter position is reached, and in that the switch-on command is derived from the output pulse of the counter (32).

## Revendications

1. Mécanisme de commande pour des éléments mobiles, en particulier dans les véhicules, tels que lèveglaces, commande de toit ouvrant, régleur de rétroviseur et analogues, avec un moteur électrique réversible, qui présente un arbre de rotor pouvant être entraîné dans les deux sens de rotation, et avec un appareil de commande pour mettre en route le moteur dans un sens de rotation prédéterminé de l'arbre du rotor sur un ordre de branchement, mécanisme de commande caractérisé en ce qu'à l'arbre du rotor (11) du moteur (10) est associé un détecteur (12) au moins opérationnel quand le moteur (10) est débranché, détecteur qui sert à détecter les mouvements de rotation de l'arbre (11) du rotor et en ce que l'appareil de commande (16) contient une unité d'exploitation (29) qui sert à exploiter les signaux du détecteur et à engendrer un ordre de branchement dans un sens de rotation opposé au mouvement de rotation de l'arbre du rotor (11).

2. Mécanisme selon la revendication 1, caractérisé en ce que le détecteur (12) est constitué de telle façon que dans son signal de sortie sont contenues des fractions de signaux caractéristiques pour respectivement une révolution de l'arbre du rotor et en ce que l'unité d'exploitation (29) est constitué de telle façon qu'elle engendre à partir de chaque fraction de signal une impulsion de comptage, compte les impulsions de comptage et engendre l'ordre de branchement quand est atteint un nombre prédéfini d'impulsions de comptage.

3. Mécanisme selon la revendication 2, caractérisé en ce que le détecteur (12) présente un aimant permanent (13) reposant sur l'arbre du rotor (11) de façon solidaire en rotation et deux détecteurs de Hall (14, 15) disposés de façon fixe dans l'espace, décalés de 90° dans le sens de rotation de l'arbre du rotor (11), détecteur qui de préférence sont intégrés dans ce qu'on appelle un circuit intégré (IC) de Hall, qui délivre à deux canaux de sortie, deux séries d'impulsions déphasées de 90°, à partir d'impulsions rectangulaires.

4. Mécanisme selon la revendication 3, caractérisé en ce que l'unité d'exploitation (29) présente un détecteur de flanc (30), un circuit de mise en forme des impulsions (31) et un compteur (32) préréglable, qui délivre une impulsion de sortie lorsqu'est atteinte une position prédéfinie par le compteur et en ce que l'ordre de branchement et extrait de l'impulsion de sortie du compteur (32).
